# EUROPEAN PATENT APPLICATION

(11) **EP 2 924 862 A1**
(43) Date of publication of application: **30.09.2015**
(21) Application number: 14185209.5
(22) Date of filing: 17.09.2014
(51) Int. Cl.: H02M 3/156, H02M 7/217, H05B 33/08, H02M 1/00

(54) **Power supply circuit and luminaire device**

(30) Priority: 24.03.2014 JP 2014060842; 29.08.2014 JP 2014174900
(71) Applicant: Toshiba Lighting & Technology Corporation, Yokosuka-shi Kanagawa 237-8510 (JP)
(72) Inventor: Ishikawa, Masato, Kanagawa, 237-8510 (JP); Kitamura, Noriyuki, Kanagawa, 237-8510 (JP)
(74) Representative: Willquist, Sofia Ellinor

(57) **Abstract**

According to one embodiment, there is provided a power supply circuit (14) including a power converter (20) and a feedback circuit (25). The power converter (20) controls a current flowing through a DC load (12) depending on the turning on and off of the output element (40) and on a voltage applied to a control terminal (41c) of a current control element (41). The feedback circuit (25) includes a differential amplifier circuit (80) and an input and output insulation element (100). The differential amplifier circuit (80) outputs a feedback signal corresponding to a difference between a detected voltage of the current flowing through the DC load (12) and a reference voltage from the output terminal (81a). The input and output insulation element (100) transmits the feedback signal to the control terminal (41c) in a state where the control terminal (41c) and the output terminal (81a) are electrically insulated. The power converter (20) has a voltage applying unit (55). The voltage applying unit (55) makes the current control element (41) be in a turned off state when the feedback signal is not transmitted and makes the voltage applied to the control terminal (41c) be increased when the feedback signal is transmitted.

## Description

### FIELD

Embodiments described herein relate generally to a power supply circuit and a luminaire device.

### BACKGROUND

There is a power supply circuit that supplies power to a DC load. For example, the power supply circuit is used for a luminaire device that lights a lighting load by supplying power to the lighting load. In such a power supply circuit, a current flowing through a load is detected and a feedback control is performed so that the current flowing through the load is substantially constant.

The power supply circuit has a current control element that controls the current flowing through the DC load. For example, a field effect transistor and the like are used for the current control element. The current control element has a control terminal and controls the current flowing through the DC load depending on the voltage of the control terminal.

A semiconductor device such as a transistor is used for the feedback control. The semiconductor device is connected to the control terminal of the current control element and controls the voltage applied to the control terminal of the current control element depending on the current flowing through the DC load. Thereby, the feedback control is performed.

In this case, the voltage of the control terminal is generated by dividing a power supply voltage and fluctuation of the power supply voltage can affect the voltage of the control terminal. Thus, for example, in a transient state such as that when the power is turned on, a flash phenomenon in which the lighting load is turned on with high brightness momentarily occurs. Furthermore, when the power supply voltage is abruptly changed through a dimmer of a phase control system and the like, flickering occurs (periodic change in the brightness).

Thus, in the power supply circuit and the luminaire device using the power supply circuit, even when the feedback control is performed, stable operation in which occurrence of the flash phenomenon or the like is suppressed is desired.

### BRIEF DESCRIPTION OF THE DRAWINGS

FIG. 1 is a block diagram schematically illustrating a luminaire device according to an embodiment; and
FIG. 2 is a circuit diagram schematically illustrating a power supply circuit according to the embodiment.

### DETAILED DESCRIPTION

According to an embodiment, there is provided a power supply circuit including a power converter, a feedback circuit, and a voltage applying unit. The power converter includes a current control element having a pair of main terminals and a control terminal, and an output element connected to one of the pair of main terminals of the current control element in series. The power converter is connected to a power supply path and a DC load, and converts input power supplied from the power supply path into DC power depending on the DC load by controlling the current flowing through the DC load depending on the turning on and off of the output element and on a voltage applied to the control terminal of the current control element, and supplies the DC power to the DC load. The feedback circuit includes a differential amplifier circuit and an input and output insulation element. The differential amplifier circuit includes an output terminal and outputs a feedback signal corresponding to a difference between a detected voltage of the current flowing through the DC load and a reference voltage from the output terminal. The input and output insulation element is provided between the control terminal of the current control element and the output terminal of the differential amplifier circuit, and transmits the feedback signal to the control terminal in a state where the control terminal and the output terminal are electrically insulated. The voltage applying unit applies a voltage to the control terminal making the current control element enter a turned off state, when the input and output insulation element does not transmit the feedback signal to the control terminal and makes the voltage applied to the control terminal be higher than the voltage making the current control element be in a turned off state depending on the feedback signal, when the input and output insulation element transmits the feedback signal to the control terminal.

According to another embodiment, there is provided a luminaire device including a lighting load and a power supply circuit. The power supply circuit supplies power to the lighting load. The power supply circuit includes a power converter and a feedback circuit. The power converter includes a current control element having a pair of main terminals and a control terminal, and an output element connected to one of the pair of main terminals of the current control element in series. The power converter is connected to a power supply path and a DC load, and converts input power supplied from the power supply path into DC power depending on the DC load by controlling a current flowing through the DC load depending on the turning on and off of the output element and on a voltage applied to the control terminal of the current control element, and supplies the DC power to the DC load. The feedback circuit includes a differential amplifier circuit and an input and output insulation element. The differential amplifier circuit includes an output terminal and outputs a feedback signal corresponding to a difference between a detected voltage of the current flowing through the DC load and a reference voltage from the output terminal. The input and output insulation element is provided between the control terminal of the current control element and the output terminal of the differential amplifier circuit, and transmits the feedback signal to the control terminal in a state where the control terminal and the output terminal are electrically insulated. The power converter includes a voltage applying unit that applies a voltage to the control terminal making the current control element be in a turned off state, when the input and output insulation element does not transmit the feedback signal to the control terminal and makes the voltage applied to the control terminal be higher than the voltage making current control element be in a turned off state depending on the feedback signal, when the input and output insulation element transmits the feedback signal to the control terminal.

Hereinafter, each embodiment will be described with reference to the drawings.

Moreover, the drawings are schematic or conceptual diagrams and a relationship between a thickness and a width of each portion, and ratios of sizes between portions are not necessarily the same as those in reality. Furthermore, within the same portion, dimensions and ratios may be different from each other depending on the drawing.

Moreover, in the specification of this application and each drawing, the same reference numerals are given to elements similar to those described above with reference to aforementioned drawings and detailed description will be appropriately omitted.

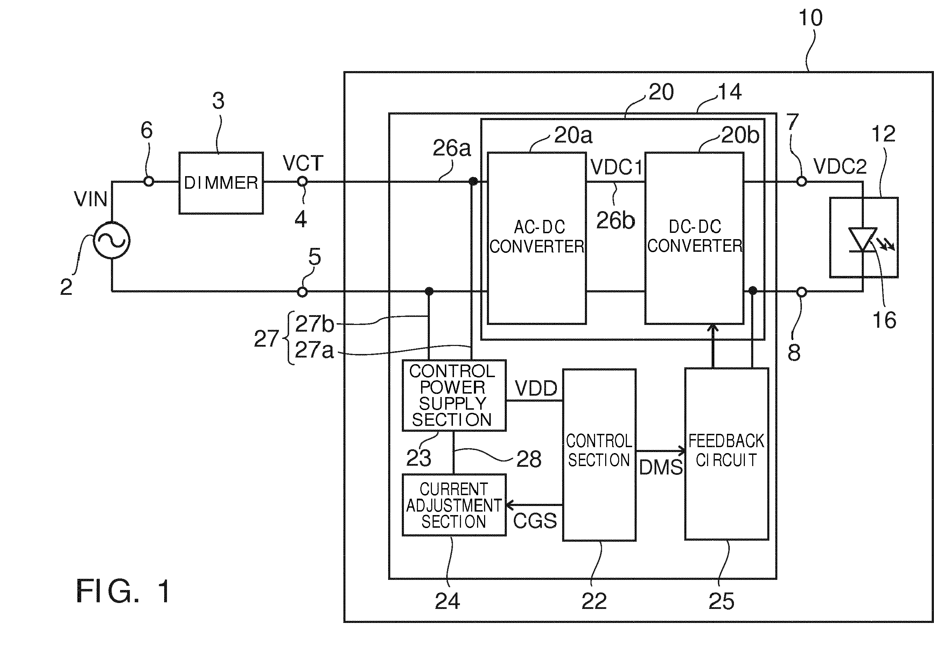

FIG. 1 is a block diagram schematically illustrating a luminaire device according to an embodiment.

As illustrated in FIG. 1, a luminaire device 10 includes a lighting load 12 (DC load) and a power supply circuit 14. For example, the lighting load 12 has a lighting light source 16 such as a light-emitting diode (LED). For example, the lighting light source 16 may be an organic light-emitting diode (OLED). For example, a light emitting element having a forward drop voltage is used for the lighting light source 16. The lighting load 12 turns on the lighting light source 16 by applying an output voltage and supplying an output current from the power supply circuit 14. Values of the output voltage and the output current are defined depending on the lighting light source 16. A plurality of lighting light sources 16 are provided. The plurality of lighting light sources 16 are connected to each other in series. The total forward drop voltage of each of the lighting light sources 16 is approximately 60 V. The number of the lighting light sources 16 may be arbitrary. The lighting light source 16 may be only one.

The power supply circuit 14 is connected to an AC power supply 2 and a dimmer 3. Moreover, in the specification of this application, "connection" means electrical connection and includes a case where physical connection does not occur or a case where connection occurs through other elements. Furthermore, "connection" also includes a case where the power supply circuit 14 is magnetically connected through a transformer and the like and a case where the power supply circuit 14 is optically connected through a photocoupler and the like.

For example, the AC power supply 2 is a commercial power supply. The dimmer 3 generates an AC voltage VCT in which conduction angle control is performed by an AC power supply voltage VIN of the AC power supply 2. The power supply circuit 14 converts the AC voltage VCT supplied from the dimmer 3 into DC voltage and outputs the DC voltage to the lighting load 12, thereby turning on the lighting light source 16. Furthermore, the power supply circuit 14 performs dimming of the lighting light source 16 synchronizing with the AC voltage VCT in which the conduction angle control is performed. Moreover, the dimmer 3 is provided if required and may be omitted. If the dimmer 3 is not provided, the power supply voltage VIN of the AC power supply 2 is supplied to the power supply circuit 14.

For example, for the conduction angle control of the dimmer 3, there is a phase control (leading edge) system that controls a conductive phase in a period in which an absolute value of the AC voltage becomes the maximum value from the zero crossing point of the AC voltage and a reverse phase control (trailing edge) system that controls a non-conductive phase in a period in which the AC voltage crosses zero after the absolute value of the AC voltage becomes the maximum value.

The dimmer 3 performing the phase control has a simple circuit configuration and may handle a relatively large power load. However, if a triac is used, a light load operation becomes difficult and if a so-called power supply dip in which a power supply voltage temporarily drops occurs, an unstable operation is likely to occur. Furthermore, if a capacitive load is connected, since an inrush current is generated, there are characteristics such that compatibility with the capacitive load is bad and the like.

On the other hand, the dimmer 3 performing the reverse phase control may be operated even in the light load and the inrush current is not generated even if the capacitive load is connected, and the operation is stabilized even if the power supply dip occurs. However, since the circuit configuration is complicated and a temperature is likely to be increased, the case is not suited to a heavy load. Furthermore, if the inductive load is connected, there are characteristics such that surge occurs and the like.

In the embodiment, a configuration in which the dimmer 3 is inserted in series between terminals 4 and 6 on one side of a pair of power supply lines supplying the power supply voltage VIN is exemplified, but other configurations may be used.

The power supply circuit 14 includes a power converter 20, a control section 22, a control power supply section 23, a current adjustment section 24, and a feedback circuit 25. Furthermore, the power supply circuit 14 includes a pair of input terminals 4 and 5, and a first power supply path 26a connected to each of the input terminals 4 and 5. The power supply circuit 14 is connected to the AC power supply 2 or the dimmer 3 through each of the input terminals 4 and 5.

The power converter 20 includes an AC-DC converter 20a and a DC-DC converter 20b. The AC-DC converter 20a is connected to the first power supply path 26a. The AC-DC converter 20a converts the AC voltage VCT supplied through the first power supply path 26a into a first DC voltage VDC1.

The DC-DC converter 20b is connected to the AC-DC converter 20a through a second power supply path 26b. Furthermore, the DC-DC converter 20b is connected to the lighting load 12. The DC-DC converter 20b converts the first DC voltage VDC1 supplied from the second power supply path 26b into a second DC voltage VDC2 having a predetermined voltage value depending on the lighting load 12, thereby supplying the second DC voltage VDC2 to the lighting load 12. An absolute value of the second DC voltage VDC2 is different from an absolute value of the first DC voltage VDC1. For example, the absolute value of the second DC voltage VDC2 is lower than the absolute value of the first DC voltage VDC1. In the example, the DC-DC converter 20b is a step-down type converter. The lighting light source 16 of the lighting load 12 is turned on by supplying the second DC voltage VDC2.

As described above, the power converter 20 is connected to the first power supply path 26a and the lighting load 12 and converts power supplied from the first power supply path 26a into DC power depending on the lighting load 12, and supplies the DC power to the lighting load 12. In the example, the power converter 20 converts AC power supplied from the AC power supply 2 or the dimmer 3 into DC power. In this case, for example, the DC power output from the AC-DC converter 20a may be supplied to the lighting load 12. For example, the DC power supplied from the DC power supply may be converted into different DC power. In this case, the AC-DC converter 20a is omitted. For example, the power converter 20 may include at least one of the AC-DC converter 20a and the DC-DC converter 20b.

The control power supply section 23 has a wiring section 27 connected to the first power supply path 26a. The wiring section 27 includes wiring 27a connected to the input terminal 4 and wiring 27b connected to the input terminal 5. The control power supply section 23 converts the AC voltage VCT input through the wiring section 27 into a DC driving voltage VDD depending on the control section 22, thereby supplying the driving voltage VDD to the control section 22. For example, the wiring section 27 may be connected to the second power supply path 26b.

The current adjustment section 24 has a branch path 28 electrically connected to the first power supply path 26a and is capable of switching between a conductive state in which some current flowing through the first power supply path 26a flows through the branch path 28 and a non-conductive state in which the current does not flow. Therefore, for example, the current adjustment section 24 adjusts the current flowing through the first power supply path 26a. In the example, the branch path 28 of the current adjustment section 24 is connected to the first power supply path 26a through the control power supply section 23. The branch path 28 may be directly connected to the first power supply path 26a without going through the control power supply section 23. Moreover, the non-conductive state also includes a case where a small current that does not affect the operation flows through the branch path 28. For example, the non-conductive state is a state where the current flowing through the branch path 28 is smaller than that of the conductive state. For example, the branch path 28 may be connected to the second power supply path 26b.

The control section 22 detects the conduction angle of the AC voltage VCT. The control section 22 generates a dimming signal DMS corresponding to the detected conduction angle and inputs the dimming signal DMS into the feedback circuit 25. Furthermore, the control section 22 generates a control signal CGS depending on the detected conduction angle and inputs the control signal CGS into the current adjustment section 24, thereby switching between the conductive state and the non-conductive state of the current adjustment section 24 is controlled. As described above, the control section 22 controls the current adjustment section 24 and the feedback circuit 25 depending on the detected conduction angle, thereby dimming the lighting light source 16 in synchronization with the conduction angle control of the dimmer 3. For example, for the control section 22, a microprocessor is used.

The feedback circuit 25 is connected to an output terminal 8 of the power supply circuit 14 on a low-potential side. That is, the feedback circuit 25 is connected to an end portion of the lighting load 12 on the low-potential side. The feedback circuit 25 detects the current flowing through the lighting load 12 (the lighting light source 16). The feedback circuit 25 feedback controls the DC-DC converter 20b, based on the dimming signal DMS input from the control section 22 and the detected current. For example, the feedback circuit 25 feedback controls the DC-DC converter 20b so that a substantially constant current flows through the lighting load 12. For example, if an overcurrent flows through the lighting light source 16, the DC-DC converter 20b is feedback controlled so as to reduce the current. Therefore, the feedback circuit 25 prevents the overcurrent from flowing through the lighting light source 16.

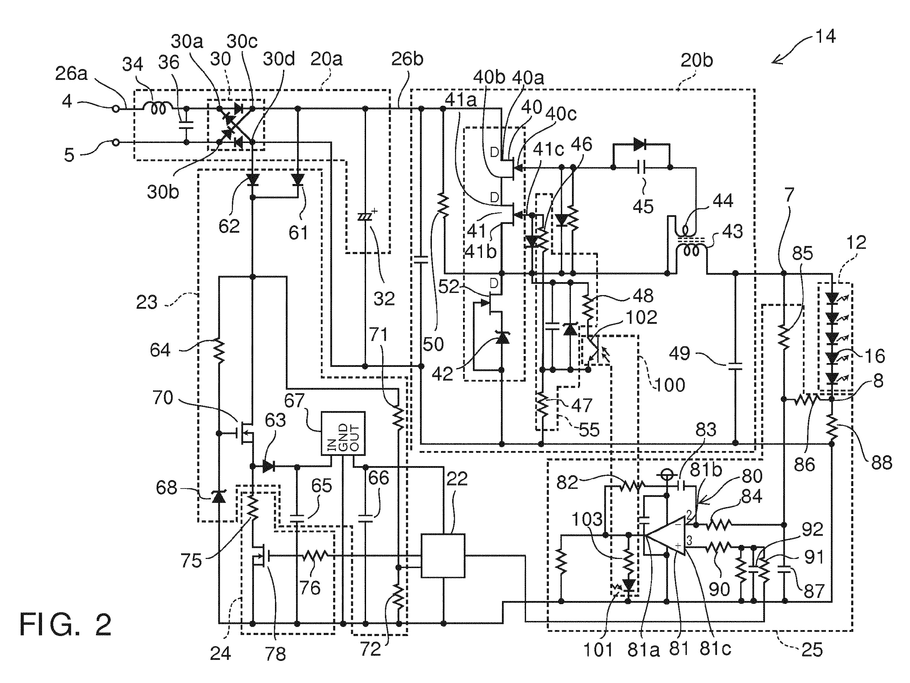

FIG. 2 is a circuit diagram schematically illustrating a power supply circuit according to the embodiment.

As illustrated in FIG. 2, the AC-DC converter 20a has a rectifier circuit 30, a smoothing capacitor 32, an inductor 34, and a filter capacitor 36.

For example, the rectifier circuit 30 is a diode bridge. Input terminals 30a and 30b of the rectifier circuit 30 are connected to the pair of input terminals 4 and 5. The AC voltage VCT in which phase control or reverse phase control is performed through the dimmer 3 is input into the input terminals 30a and 30b of the rectifier circuit 30. For example, in the rectifier circuit 30, full-wave rectification is performed in the AC voltage VCT and a rectified voltage after performing the full-wave rectification is generated between a high-potential terminal 30c and a low-potential terminal 30d. For example, the rectifier circuit 30 converts the AC voltage VCT into an undulating voltage.

The smoothing capacitor 32 is connected between the high-potential terminal 30c and the low-potential terminal 30d of the rectifier circuit 30. The smoothing capacitor 32 smoothes the rectified voltage rectified by the rectifier circuit 30. Therefore, the first DC voltage VDC1 appears on both ends of the smoothing capacitor 32.

The inductor 34 is connected to the input terminal 4 in series. For example, the inductor 34 is connected to the first power supply path 26a in series. The filter capacitor 36 is connected between the input terminals 4 and 5. For example, the filter capacitor 36 is connected to the first power supply path 26a in parallel. For example, the inductor 34 and the filter capacitor 36 remove noise included in the AC voltage VCT.

The DC-DC converter 20b is connected to both ends of the smoothing capacitor 32. Therefore, the first DC voltage VDC1 is input into the DC-DC converter 20b. The DC-DC converter 20b converts the first DC voltage VDC1 into the second DC voltage VDC2 having a different absolute value and outputs the second DC voltage VDC2 to output terminals 7 and 8 of the power supply circuit 14. The lighting load 12 is connected to the output terminals 7 and 8. The lighting load 12 turns on the lighting light source 16 through the second DC voltage VDC2 supplied from the power supply circuit 14.

For example, the DC-DC converter 20b has an output element 40, a current control element 41, a rectifying element 42, an inductor 43, feedback winding (driving electrode) 44 driving the output element 40, a coupling capacitor 45, an output capacitor 49, a bias resistor 50, and a voltage applying unit 55. The voltage applying unit 55 has voltage dividing resistors 46, 47, and 48.

The output element 40 and the current control element 41 are, for example, field effect transistors (FET) and are, for example, high electron mobility transistors (HEMT), and are normally turned on type elements.

The current control element 41 includes a pair of main terminals 41a and 41b, and a control terminal 41c. The control terminal 41c is a terminal for controlling the current flowing between the main terminals 41a and 41b. The current control element 41 controls the current flowing through the lighting load 12 depending on the voltage applied to the control terminal 41c. One main terminal 41a is, for example, a drain, the other main terminal 41b is, for example, a source, and the control terminal 41c is, for example, a gate.

The drain of the current control element 41 is electrically connected to the second power supply path 26b through the output element 40. The source of the current control element 41 is electrically connected to the lighting load 12. The gate of the current control element 41 is an electrode for controlling the current flowing between the drain and the source of the current control element 41.

The current control element 41 has a first state in which the current flows between the drain and the source and a second state in which the current flowing between the drain and the source is smaller than that of the first state. For example, the first state is a turned on state and, for example, the second state is a turned off state. The first state is not limited to the turned on state. The second state is not limited to the turned off state. The first state may be an arbitrary state in which the flowing current is relatively greater than that of the second state. The second state may be an arbitrary state in which the flowing current is relatively smaller than that of the first state.

In the current control element 41 that is a normally turned on type element, the potential of the gate is decreased more than the potential of the source, thereby changing the element from the first state to the second state. For example, The current control element 41 is changed from the turned on state to the turned off state by making the potential of the gate be an opposite potential relative to the potential of the source.

The output element 40 includes a pair of main terminals 40a and 40b, and a control terminal 40c. One main terminal 40a is, for example, a drain and the other main terminal 40b is, for example, a source. The control terminal 40c is, for example, a gate. The drain of the output element 40 is connected to the high-potential terminal 30c of the rectifier circuit 30. The source of the output element 40 is connected to the drain of the current control element 41. The gate of the output element 40 is connected to one end of the feedback winding 44 through the coupling capacitor 45.

The source of the current control element 41 is connected to one end of the inductor 43 and the other end of the feedback winding 44. The voltage in which the potential of the source of the current control element 41 is divided by the voltage dividing resistors 46, 47, and 48 is input into the gate of the current control element 41. For example, a plurality of voltage dividing resistors 46, 47, and 48 are connected to the gate of the current control element 41. The number of the voltage dividing resistors connected to the gate of the current control element 41 is not limited to three and may be two, or may be four or more. Protection diodes are respectively connected to the gate of the output element 40 and the gate of the current control element 41.

The bias resistor 50 is connected between the drain of the output element 40 and the source of the current control element 41 and supplies the DC voltage to the voltage dividing resistors 46, 47, and 48. As a result, a potential that is lower than that of the source is supplied to the gate of the current control element 41.

When the current increasing from one end to the other end of the inductor 43 flows, the inductor 43 and the feedback winding 44 are magnetically coupled with a polarity in which the voltage of positive polarity is supplied to the gate of the output element 40.

The rectifying element 42 is connected between the source of the current control element 41 and the low-potential terminal 30d of the rectifier circuit 30 in a direction in which a direction from the low-potential terminal 30d to the current control element 41 is assumed to be a forward direction.

In the example, a semiconductor device 52 is provided between the rectifying element 42 and the source of the current control element 41. For example, for the semiconductor device 52, a FET, a GaN-HEMT, and the like are used. For example, the semiconductor device 52 is a normally turned on type. A gate of the semiconductor device 52 is connected to the low-potential terminal 30d of the rectifier circuit 30. Therefore, the semiconductor device 52 is held in the turned on state.

The other end of the inductor 43 is connected to the output terminal 7. The low-potential terminal 30d of the rectifier circuit 30 is connected to the output terminal 8. The output capacitor 49 is connected between the output terminal 7 and the output terminal 8. The lighting load 12 is connected to the output capacitor 49 in parallel between the output terminal 7 and the output terminal 8.

The control power supply section 23 has rectifying elements 61 to 63, a resistor 64, capacitors 65 and 66, a regulator 67, a Zener diode 68, and a semiconductor device 70.

For example, the rectifying elements 61 and 62 are diodes. The anode of the rectifying element 61 is connected to the high-potential terminal 30c of the rectifier circuit 30 through the wiring 27a. The anode of the rectifying element 42 is connected to the low-potential terminal 30d of the rectifier circuit 30 through the wiring 27b.

For example, for the semiconductor device 70, a FET, a GaN-HEMT, and the like are used. Hereinafter, the semiconductor device 70 is described as the FET. In the example, the semiconductor device 70 is an n-channel enhancement type FET. The semiconductor device 70 has a source, a drain, and a gate. The potential of the drain is set to be higher than the potential of the source. The gate is used for switching between a first state in which the current flows between the source and the drain and a second state in which the current flowing between the source and the drain is smaller than the current of the first state. In the second state, current does not substantially flow between the source and the drain. The semiconductor device 70 may be a p-channel type or may be a depletion type. For example, if the semiconductor device 70 is the p-channel type, the potential of the source is set to be higher than the potential of the drain.

The drain of the semiconductor device 70 is connected to the cathode of the rectifying element 61 and the cathode of the rectifying element 62. That is, the drain of the semiconductor device 70 is connected to the first power supply path 26a through the rectifying elements 61 and 62. The source of the semiconductor device 70 is connected to the anode of the rectifying element 63. The gate of the semiconductor device 70 is connected to the cathode of the Zener diode 68. Furthermore, the gate of the semiconductor device 70 is connected to the high-potential terminal 30c of the rectifier circuit 30 through the resistor 64.

The cathode of the rectifying element 63 is connected to one end of the capacitors 65 and the input terminal of the regulator 67. The output terminal of the regulator 67 is connected to the control section 22 and one end of the capacitor 66.

The current of each polarity associated with the application of the AC voltage VCT flows to the drain of the semiconductor device 70 through the rectifying element 61. Therefore, the undulating voltage in which full-wave rectification is performed in the AC voltage VCT is applied to the drain of the semiconductor device 70.

The undulating voltage is applied to the cathode of the Zener diode 68 through the resistor 64 and the rectifying element 61. Therefore, substantially constant voltage is applied to the gate of the semiconductor device 70 depending on the breakdown voltage of the Zener diode 68. Thus, substantially constant current flows between the drain and the source of the semiconductor device 70. As described above, the semiconductor device 70 functions as a constant current element. The semiconductor device 70 rectifies the current flowing through the wiring section 27.

The capacitor 65 smoothes the undulating voltage supplied from the source of the semiconductor device 70 through the rectifying element 63 and converts the undulating voltage into the DC voltage. The regulator 67 generates the substantially constant DC driving voltage VDD from the input DC voltage and outputs the voltage to the control section 22. For example, the capacitor 66 is used for removing the noise of the driving voltage VDD. Therefore, the driving voltage VDD is supplied to the control section 22.

Furthermore, the control power supply section 23 is further provided with resistors 71 and 72. One end of the resistor 71 is connected to the cathode of the rectifying elements 61 and 62. The other end of the resistor 71 is connected to one end of the resistor 72. The other end of the resistor 72 is connected to the low-potential terminal 30d of the rectifier circuit 30. A connection point between the resistors 71 and 72 is connected to the control section 22. Therefore, the voltage depending on dividing ratios of the resistors 71 and 72 inputs the control section 22 as the detected voltage for detecting the absolute value of the AC voltage VCT.

For example, the control section 22 performs detection of the presence or absence of the conduction angle control of the AC voltage VCT or the type (phase control or reverse phase control) of the conduction angle control, based on the detected voltage. Then, the control section 22 performs the detection of the conduction angle if the conduction angle control is performed. The control section 22 generates the dimming signal DMS and inputs the dimming signal DMS into the feedback circuit 25, based on the detected result. For example, the control section 22 inputs a PWM signal corresponding to the detected conduction angle into the feedback circuit 25 as the dimming signal DMS.

The current adjustment section 24 has resistors 75 and 76, and a switching element 78. For the switching element 78, for example, a FET, a GaN-HEMT, or the like is used. Hereinafter, the switching element 78 is described as the FET.

One end of the resistor 75 is connected to the source of the semiconductor device 70. The other end of the resistor 75 is connected to the drain of the switching element 78. The gate of the switching element 78 is connected to the control section 22 through the resistor 76. The control section 22 inputs the control signal CGS into the gate of the switching element 78. For example, for the switching element 78, a normally turned off type is used. For example, the switching element 78 is changed from the turned off state to the turned on state by switching the control signal CGS input from the control section 22 from Lo to Hi.

When the switching element 78 is in the turned on state, for example, some of the current flowing through the first power supply path 26a flows to the branch path 28 through the rectifying elements 61 and 62 and the semiconductor device 70. That is, the current adjustment section 24 is in a conductive state by making the switching element 78 be in the turned on state and the current adjustment section 24 is in a non-conductive state by making the switching element 78 be in the turned off state.

For example, the control section 22 generates the control signal CGS depending on the presence or absence of the conduction angle control of the AC voltage VCT and the detected result of the type thereof. For example, when the phase control type conduction angle control is performed, at the AC voltage VCT of a predetermined value or less, a holding current required to turn on the triac flows through the current adjustment section 24 (the branch path 28). Therefore, for example, it is possible to stabilize the operation of the dimmer 3. On the other hand, when the reverse phase control type conduction angle control is performed, when switching from the conductive state to a blocking state, the charge accumulated in the filter capacitor 36 and the like is pulled out to the current adjustment section 24. Therefore, for example, it is possible to further increase the detection accuracy of the conduction angle.

The feedback circuit 25 includes a differential amplifier circuit 80. The differential amplifier circuit 80 has, for example, an operational amplifier 81, a resistor 82, and a capacitor 83. The operational amplifier 81 includes an output terminal 81a, an inverting input terminal 81b, and a non-inverting input terminal 81c. The resistor 82 is connected between the output terminal 81a of the operational amplifier 81 and the inverting input terminal 81b of the operational amplifier 81. The capacitor 83 is connected between the resistor 82 and the inverting input terminal 81b of the operational amplifier 81. That is, the differential amplifier circuit 80 has a negative feedback.

The inverting input terminal 81b of the operational amplifier 81 is connected to one end of a resistor 84. The other end of the resistor 84 is connected to one end of a resistor 85, one end of a resistor 86, and one end of a capacitor 87. The other end of the capacitor 87 is connected to the low-potential terminal 30d of the rectifier circuit 30. The other end of the resistor 85 is connected to the output terminal 7. The other end of the resistor 86 is connected to the output terminal 8 and one end of a resistor 88. The other end of the resistor 88 is connected to the low-potential terminal 30d of the rectifier circuit 30.

Thus, the DC voltage in which the second DC voltage VDC2 applied between the output terminals 7 and 8 is divided by the resistors 85 and 86 is input into the inverting input terminal 81b of the operational amplifier 81 as the detected voltage. That is, the inverting input terminal 81b of the operational amplifier 81 is connected to the end portion of the lighting load 12 on the low-potential side. Thus, it is possible to detect the current flowing through the lighting load 12. If a light emitting element such as an LED is used for the lighting light source 16, the voltage of the lighting load 12 is substantially constant depending on the forward drop voltage of the lighting light source 16. Therefore, if a light emitting element such as an LED is used for the lighting light source 16, it is possible to appropriately detect the current flowing through the lighting load 12 by connecting to the end portion of the lighting load 12 on the low-potential side.

The non-inverting input terminal 81c of the operational amplifier 81 is connected to one end of a resistor 90. The other end of the resistor 90 is connected to one end of a resistor 91 and one end of a capacitor 92. The other end of the capacitor 92 is connected to the low-potential terminal 30d of the rectifier circuit 30. The other end of the resistor 91 is connected to the control section 22. As described above, the non-inverting input terminal 81c of the operational amplifier 81 is connected to the control section 22 through the resistors 90 and 91. The dimming signal DMS from the control section 22 is input into the non-inverting input terminal 81c of the operational amplifier 81.

For example, the DC voltage in which the PWM signal is smoothed by the capacitor 92 is input into the non-inverting input terminal 81c of the operational amplifier 81 as the dimming signal DMS. For example, the DC voltage depending on a degree of dimming of the dimmer 3 is input into the non-inverting input terminal 81c of the operational amplifier 81 as the dimming signal DMS. A voltage level of the dimming signal DMS is set corresponding to the voltage level of the detected voltage input into the inverting input terminal 81b. More specifically, for example, the voltage level of the dimming signal DMS corresponding to a desired degree of dimming is set to be substantially the same as the voltage level of the detected voltage in a case where the lighting light source 16 emits the light at the brightness corresponding to the degree of dimming thereof.

As described above, the detected voltage corresponding to the current flowing through the lighting load 12 is input into the inverting input terminal 81b of the operational amplifier 81 and the dimming signal DMS is input into the non-inverting input terminal 81c of the operational amplifier 81. Therefore, the operational amplifier 81 outputs a signal corresponding to the difference between the detected voltage and the dimming signal DMS from the output terminal 81a as the feedback signal. The output of the operational amplifier 81 is also increased as the difference between the detected voltage and the dimming signal DMS is increased. The output of the operational amplifier 81 is increased when the dimming signal DMS is higher than the detected voltage.

As described above, in the example, the dimming signal DMS is used as the reference voltage. For example, if the dimming is not performed, the substantially constant DC voltage that is the reference voltage is input into the non-inverting input terminal 81c of the operational amplifier 81. As described above, the differential amplifier circuit 80 has the output terminal 81a and outputs the feedback signal corresponding to the difference between the detected voltage of the current flowing through the lighting load 12 and the reference voltage from the output terminal 81a.

The feedback circuit 25 further includes an input and output insulation element 100. The input and output insulation element 100 is provided between the output terminal of the differential amplifier circuit 80 and the control terminal 41c of the current control element 41. In the example, the output terminal of the differential amplifier circuit 80 is the output terminal 81a of the operational amplifier 81. The input and output insulation element 100 transmits the feedback signal output from the differential amplifier circuit 80 to the control terminal 41c of the current control element 41, in a state where the control terminal 41c of the current control element 41 and the output terminal of the differential amplifier circuit 80 are electrically insulated. Thus, the current flowing through the current control element 41 is changed and the current flowing through the lighting load 12 is feedback controlled.

In the example, the input and output insulation element 100 includes a light emitter 101 and a light receiver 102, for example. That is, in the example, the input and output insulation element 100 is a so-called photocoupler. For example, the input and output insulation element 100 optically transmits the feedback signal while electrically insulating the control terminal 41c of the current control element 41 and the output terminal of the differential amplifier circuit 80. For example, the input and output insulation element 100 may be a transformer or the like. For example, the input and output insulation element 100 may magnetically transmit the feedback signal while electrically insulating the control terminal 41c of the current control element 41 and the output terminal of the differential amplifier circuit 80. The input and output insulation element 100 may be an arbitrary element capable of transmitting the feedback signal while electrically insulating the control terminal 41c of the current control element 41 and the output terminal of the differential amplifier circuit 80.

The light emitter 101 is connected to the output terminal 81a of the operational amplifier 81 through a resistor 103. The light emitter 101 converts the feedback signal into an optical signal. The light emitter 101 changes the brightness of the optical signal depending on the voltage value of the feedback signal. The differential amplifier circuit 80 increases the brightness of the light emitted from the light emitter 101 when the dimming signal DMS is higher than the detected voltage. The light emitter 101 applies the converted optical signal to the light receiver 102 and inputs the optical signal into the light receiver 102.

One end of the light receiver 102 is connected to one end of the voltage dividing resistor 48. The other end of the voltage dividing resistor 48 is connected to the source of the current control element 41. One end of the voltage dividing resistor 46 is connected to the gate of the current control element 41. The other end of the voltage dividing resistor 46 is connected to one end of the voltage dividing resistor 47. The other end of the voltage dividing resistor 47 is connected to the low-potential terminal 30d of the rectifier circuit 30. The other end of the light receiver 102 is connected to a connection point of the voltage dividing resistors 46 and 47. The voltage dividing resistor 46 (first voltage dividing resistor) is provided between the gate of the current control element 41 and the low-potential terminal 30d. The voltage dividing resistor 47 (second voltage dividing resistor) is provided between the voltage dividing resistor 46 and the low-potential terminal 30d. The voltage dividing resistor 48 (third voltage dividing resistor) is provided between the source of the current control element 41 and the voltage dividing resistor 47. The light receiver 102 is provided between the voltage dividing resistor 47 and the voltage dividing resistor 48. The light receiver 102 is connected to the gate of the current control element 41 through the voltage dividing resistor 46.

The light receiver 102 receives the optical signal input from the light emitter 101 and converts the optical signal into the electric signal again. For example, the light receiver 102 changes the current flowing through the voltage dividing resistor 48 depending on the brightness of the optical signal. Therefore, for example, the light receiver 102 changes the dividing ratio of each of the voltage dividing resistors 46, 47, and 48 depending on the brightness of the optical signal. Therefore, the voltage of the control terminal 41c of the current control element 41 is changed and the current flowing through the lighting load 12 is controlled.

The cathode of the operational amplifier 81 and the light emitter 101 is connected to the low-potential terminal 30d of the rectifier circuit 30. As described above, the reference potential of the feedback circuit 25 is set to be the potential of the low-potential terminal 30d of the rectifier circuit 30. That is, the reference potential of the feedback circuit 25 is common with the reference potential of the DC-DC converter 20b. The reference potential of the feedback circuit 25 is substantially the same as the reference potential of the DC-DC converter 20b. Thus, for example, it is possible to increase the detection accuracy of the current flowing through the lighting load 12.

When the input and output insulation element 100 does not transmit the feedback signal to the gate of the current control element 41, the voltage applying unit 55 applies the voltage to the gate of the current control element 41 making the current control element 41 be in the turned off state. That is, when the light emitter 101 does not emit the light, the voltage applying unit 55 applies the voltage to the gate of the current control element 41 making the current control element 41 be in the turned off state. In the example, the current control element 41 is the normally turned on type. Thus, the voltage applying unit 55 applies the negative voltage lower than the potential of the source of the current control element 41 to the gate of the current control element 41 as the voltage making the current control element 41 be in the turned off state.

Furthermore, when the input and output insulation element 100 transmits the feedback signal to the gate of the current control element 41, the voltage applying unit 55 makes the voltage applied to the gate of the current control element 41 be higher than the voltage making the current control element 41 be in the turned off state. That is, when the light emitter 101 emits light, the voltage applying unit 55 increases the voltage applied to the gate of the current control element 41.

In the example, the voltage applying unit 55 includes the voltage dividing resistors 46, 47, and 48. In a state where the light receiver 102 does not receive the optical signal and the current does not flow through the light receiver 102, the potential of the gate of the current control element 41 is set to be the potential of the low-potential terminal 30d of the rectifier circuit 30 through the voltage dividing resistors 46 and 47. Therefore, negative voltage is applied to the gate of the current control element 41.

The lighting load 12 includes the light emitting element having the forward drop voltage as the lighting light source 16. Thus, in a state where current does not flow through the light receiver 102, the voltage dividing resistors 46 and 47 apply negative voltage to the gate of the current control element 41 before the second DC voltage VDC2 becomes higher than the forward drop voltage.

On the other hand, in a state where the light receiver 102 receives the optical signal and the current flows through the light receiver 102, the voltage dividing resistors 46, 47, and 48 increase the voltage of the gate of the current control element 41 by the dividing ratio of the voltage dividing resistors 46, 47, and 48. For example, the voltage of the gate of the current control element 41 approaches the voltage of the source of the current control element 41. Therefore, the current corresponding to the gate voltage flows between the drain and the source of the current control element 41.

As described above, the voltage applying unit 55 increases the brightness of the light emitted by the light emitter 101 when the dimming signal DMS is higher than the detected voltage and increases the voltage applied to the gate of the current control element 41 when the brightness of the light emitted by the light emitter 101 is increased. The configuration of the voltage applying unit 55 is not limited to the voltage dividing resistors 46, 47, and 48 and may be an arbitrary configuration capable of performing the above operation.

Next, an operation of the power supply circuit 14 will be described.

First, a case where the degree of dimming of the dimmer 3 is set to be approximately 100% and the input power supply voltage VIN is substantially transmitted as it is, that is, a case where the highest first DC voltage VDC1 is input into the DC-DC converter 20b is described.

When the power supply voltage VIN is supplied to the power supply circuit 14, since the output element 40 and the current control element 41 are normally turned on type elements, both are turned on. The negative voltage is applied to the gate of the current control element 41 by the voltage applying unit 55 before the second DC voltage VDC2 is higher than the forward drop voltage. That is, the current control element 41 is in the turned off state before the lighting load 12 is turned on. The feedback circuit 25 is excited and the optical signal is output from the light emitter 101. Therefore, current flows through a path of the output element 40, the current control element 41, the inductor 43, and the output capacitor 49, and the output capacitor 49 is charged. The voltage of both ends of the output capacitor 49, that is, the voltage between the output terminals 7 and 8 is supplied to the lighting light source 16 of the lighting load 12 as the second DC voltage VDC2. Moreover, since the output element 40 and the current control element 41 are turned on, the reverse voltage is applied to the rectifying element 42. The current does not flow through the rectifying element 42.

When the second DC voltage VDC2 reaches a predetermined voltage, the current flows through the lighting load 12 and the lighting load 12 is turned on. At this time, the current flows through the path of the output element 40, the current control element 41, the inductor 43, the output capacitor 49, and the lighting load 12. For example, if the lighting light source 16 is the LED, the predetermined voltage is the forward drop voltage of the LED and is determined depending on the lighting light source 16. Furthermore, the lighting load 12 is turned off, and since the current does not flow, the output capacitor 49 holds the value of the output voltage.

The first DC voltage VDC1 input into the DC-DC converter 20b is sufficient compared to the second DC voltage VDC2. That is, a potential difference ΔV between the input and the output is sufficient. Thus, the current flowing through the inductor 43 increases. Since the feedback winding 44 is magnetically coupled to the inductor 43, an electromotive force of the polarity in which the high potential is on the side of the coupling capacitor 45 is induced in the feedback winding 44. Thus, the positive potential with respect to the source is supplied to the gate of the output element 40 through the coupling capacitor 45 and the output element 40 maintains the turned on state.

If the current flowing through the current control element 41 exceeds the upper limit value, the voltage between the drain and the source of the current control element 41 is rapidly increased. Thus, the voltage between the gate and the source of the output element 40 is lower than a threshold voltage and the output element 40 is turned off. The upper limit value is a saturated current value of the current control element 41 and is defined by the voltage input into the control terminal 41c (gate) of the current control element 41.

The potential of the control terminal 41c of the current control element 41 is set by the DC voltage supplied to the voltage dividing resistors 46, 47, and 48 through the bias resistor 50, the voltage of the lighting light source 16, the dividing ratios of the voltage dividing resistors 46, 47, and 48, and the current flowing through the light receiver 102. Moreover, as described above, since the potential of the control terminal 41c of the current control element 41 is a negative potential with respect to the potential of the main terminal 41b, it is possible to regulate the saturated current value so as to be an appropriate value.

The inductor 43 makes the current continuously flow through a path of the rectifying element 42, the output capacitor 49, and the lighting load 12. At this time, since the inductor 43 emits energy, the current of the inductor 43 decreases. Thus, the electromotive force of the polarity in which the low potential is on the side of the coupling capacitor 45 is induced in the feedback winding 44. The negative potential with respect to the source is supplied to the gate of the output element 40 through the coupling capacitor 45 and the output element 40 maintains the turned off state.

When the energy accumulated in the inductor 43 is depleted, current does not flow through the inductor 43. A direction of the electromotive force induced in the feedback winding 44 is reversed again and the electromotive force making the side of the coupling capacitor 45 have high potential is induced. Therefore, the potential that is higher than that of the source is supplied to the gate of the output element 40 and the output element 40 is turned on again. Therefore, the state returns to a state of reaching the predetermined voltage described above.

After that, the above operations are repeated. Therefore, switching of the turning on and the turning off the output element 40 is automatically repeated and the second DC voltage VDC2 in which the power supply voltage VIN is decreased is supplied to the lighting light source 16. That is, in the power supply circuit 14, a switching frequency of the output element 40 is set by the voltage dividing resistors 46, 47, and 48, and the feedback circuit 25. Furthermore, the current flowing through the lighting load 12 becomes a substantially constant current of which the upper limit is regulated by the current control element 41. Thus, it is possible to stably turn on the lighting load 12. As described above, the power converter 20 converts the AC power into the DC power by controlling the current by the turning on and turning off of the output element 40 and the current control element 41.

For example, the switching frequency of the output element 40 is a few MHz. Thus, it is difficult to use the photocoupler of which an operation speed is relatively slow for the switching control of the output element 40. On the other hand, in the current control element 41, a high-speed operation is not required compared to the output element 40. Therefore, even if the photocoupler is used as the input and output insulation element 100, it is possible to appropriately perform the conversion into DC power.

The differential amplifier circuit 80 of the feedback circuit 25 changes the brightness of the light emitter 101 of the input and output insulation element 100 depending on the difference between the detected voltage of the current flowing through the lighting load 12 and the dimming signal DMS (reference voltage). For example, if the difference between the voltage level of the dimming signal DMS and the voltage level of the detected voltage is great, the differential amplifier circuit 80 increases the brightness of the optical signal output from the light emitter 101.

The light receiver 102 changes the current flowing through the voltage dividing resistor 48 depending on the brightness of the optical signal input from the light emitter 101. The dividing ratio of each of the voltage dividing resistors 46, 47, and 48 is changed. Thus, the current flowing through the current control element 41 is changed and the current flowing through the lighting load 12 is feedback controlled. As described above, in the example, the feedback circuit 25 feedback controls the DC-DC converter 20b, based on the detected voltage and the dimming signal DMS.

Also in a case where the degree of dimming of the dimmer 3 is set to be less than 100% and the input AC voltage VCT is transmitted by being conduction angle controlled, that is, a case where a high first DC voltage VDC1 is input into the DC-DC converter 20b, the case where the output element 40 can continuously oscillate is the same as the above description. The value of the first DC voltage VDC1 input into the DC-DC converter 20b is changed and an average value of the output current can be controlled depending on the degree of dimming of the dimmer 3. Therefore, it is possible to dim the lighting load 12 depending on the degree of dimming.

Furthermore, in a case where the degree of dimming of the dimmer 3 is set to be an even smaller value, that is, a case where the first DC voltage VDC1 input into the DC-DC converter 20b is even lower, since the potential difference between both ends of the inductor 43 is small even if the output element 40 is turned on, the current flowing through the inductor 43 cannot increase. Therefore, the output element 40 does not enter the turned off state and outputs constant DC current. If the degree of dimming of the dimmer 3 is small, that is, if a potential difference ΔV between the input and the output is small, the power supply circuit 14 is operated as an operation of a series regulator.

As described above, the power supply circuit 14 performs the switching operation if the potential difference ΔV is greater than a predetermined value and performs the operation of the series regulator if the potential difference ΔV is smaller than the predetermined value. If the potential difference ΔV is great, the product of the potential difference ΔV and the current is great and if the operation of the series regulator is performed, loss increases. Therefore, if the potential difference ΔV is great, the switching operation is suitable for low power consumption. Furthermore, if the potential difference ΔV is small, since the loss decreases, problems do not occur in the operation of the series regulator.

Furthermore, in the power supply circuit 14, when the potential difference ΔV is smaller than the predetermined value, the current vibrates while continuing to be in the turned on state and not in the turned off state, and the output element 40 turns on the lighting light source 16 of the lighting load 12 at the average value of the current. Furthermore, when the potential difference ΔV is even smaller, the output element 40 outputs the DC current to the lighting load 12 and lights the lighting light source 16 while continuing to be in the turned on state. As a result, in the power supply circuit 14, the output current can be continuously changed to be zero. For example, in the luminaire device 10, the lighting light source 16 of the lighting load 12 can be smoothly turned off.

In the power supply circuit 14, it is possible to sequentially change the output current from the maximum value when the switching operation of the output element 40 is performed to the minimum value when outputting the DC current with the output element 40 continuing to be in the turned on state. For example, in the luminaire device 10, it is possible to sequentially dim the lighting load 12 in a range of 0% to 100%.

There is a power supply circuit in which the semiconductor device such as the transistor is connected to the control terminal of the current control element and the voltage of the control terminal of the current control element is controlled by the semiconductor device. In this case, the voltage of the control terminal is generated by dividing the power supply voltage and fluctuation of the power supply voltage affects the voltage of the control terminal. Thus, for example, in the transient state such as when the lighting load is turned on, the flashing phenomenon when the lighting load is turned on at high brightness momentarily occurs. Furthermore, when the power supply voltage is abruptly changed in the dimmer of the phase control system and the like, flickering occurs (cyclic change in the brightness). If a circuit preventing the flash phenomenon is added, the number of the parts is increased. Furthermore, since the semiconductor device is connected to the power supply voltage, it is necessary to use a high withstanding voltage element for the semiconductor device and it is difficult to reduce the size of the power supply circuit.

In contrast, in the power supply circuit 14 according to the embodiment, the input and output insulation element 100 transmits the feedback signal to the control terminal 41c in a state where the control terminal 41c of the current control element 41 and the output terminal of the differential amplifier circuit 80 are electrically insulated. Furthermore, when the input and output insulation element 100 does not transmit the feedback signal to the control terminal 41c, the voltage applying unit 55 makes the current control element 41 be in the turned off state. Therefore, in the power supply circuit 14, it is possible to suppress occurrence of the flashing phenomenon or occurrence of flickering. Therefore, in the power supply circuit 14, it is possible to obtain stable operation. Furthermore, it is possible to use a low withstanding voltage element as the input and output insulation element 100, by electrically insulating between the power supply side and the control side. Thus, for example, it is possible to reduce the size of the power supply circuit 14 in an easy manner.

Furthermore, if the light emitter 101 does not emit the light by failure of the input and output insulation element 100, the current control element 41 enters the turned off state and the current is not supplied to the lighting load 12. If the light emitter 101 does not emit light, it is possible to safely stop the lighting load 12. Therefore, it is possible to increase safety when the luminaire device 10 and the power supply circuit 14 fail and the like.

Furthermore, the lighting load 12 includes the light emitting element and negative voltage is applied to the control terminal 41c of the current control element 41 before the second DC voltage VDC2 is higher than the forward drop voltage. Therefore, for example, it is possible to further suppress the occurrence of the flash phenomenon when inputting the power supply and the like.

Above, the embodiments are described with reference to specific examples, but the configuration is not limited to the embodiments and the configuration may be variously modified.

For example, the output element 40 and the current control element 41 are not limited to the GaN-based HEMT. And, for example, may be a semiconductor device formed on a semiconductor substrate using a semiconductor (wide band gap semiconductor) having a wide band gap such as silicon carbide (SiC), gallium nitride (GaN), or diamond. Here, the wide band gap semiconductor refers a semiconductor of which a band gap is wider than that of gallium arsenide (GaAs) having a band gap of approximately 1.4 eV. For example, a semiconductor having the band gap of 1.5 eV or more, includes gallium phosphide (Gap, the band gap is approximately 2.3 eV), gallium nitride (GaN, the band gap is approximately 3.4 eV), diamond (C, the band gap is approximately 5.27 eV), aluminum nitride (AlN, the band gap is approximately 5.9 eV), and silicon carbide (SiC). If the withstanding voltage is equal, since such a wide-band gap semiconductor device may be smaller than the silicon semiconductor device, a parasitic capacity is small and since a high-speed operation may be performed, a switching period can be shortened, and miniaturization of the winding part, the capacitor, or the like can be achieved.

In the above embodiment, the output element 40 and the current control element 41 are cascade-connected and switching is performed by the output element 40, and the control of current is performed by the current control element 41. The configuration is not limited to the embodiment and, for example, the switching and the control of the current may be performed only by the current control element 41.

Moreover, the lighting light source 16 is not limited to the LED and, for example, may be an organic electro-luminescence (EL), an organic light-emitting diode (OLED), or the like. A plurality of lighting light sources 16 may be connected to the lighting load 12 in series or in parallel.

In the above embodiment, as the DC load, the lighting load 12 is illustrated, but the DC load is not limited to the embodiment and, for example, may be other DC loads such as a heater. In the above embodiment, as the power supply circuit, the power supply circuit 14 used in the luminaire device 10 is illustrated, but the power supply circuit is not limited to the embodiment and may be an arbitrary power supply circuit corresponding to the DC load.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power supply circuit (14) comprising:
a power converter (20) including a current control element (41) and an output element (40), the current control element (41) including a pair of main terminals (41a, 41b) and a control terminal (41c), the output element (40) being connected to one of the pair of main terminals (41a, 41b) of the current control element (41) in series, the power converter (20) being connected to a power supply path (26a) and a DC load (12), the power converter (20) being configured to convert an input power supplied from the power supply path (26a) into a DC power depending on the DC load (12) by controlling a current flowing through the DC load (12) depending on the turning on and off of the output element (40) and on a voltage applied to the control terminal (41c) of the current control element (41), the power converter (20) being configured to supply the DC power to the DC load (12); and
a feedback circuit (25) including
a differential amplifier circuit (80) including an output terminal (81a) and being configured to output a feedback signal from the output terminal (81a), the feedback signal corresponding to a difference between a detected voltage of the current flowing through the DC load (12) and a reference voltage, and
an input and output insulation element (100) provided between the control terminal (41c) of the current control element (41) and the output terminal (81a) of the differential amplifier circuit (80), the input and output insulation element (100) electrically insulating the control terminal (41c) and the output terminal (81a), the input and output insulation element (100) being configured to transmit the feedback signal to the control terminal (41c),
the power converter (20) including a voltage applying unit (55),
the voltage applying unit (55) being configured to apply a voltage to the control terminal (41c) making the current control element (41) be in a turned off state when the input and output insulation element (100) does not transmit the feedback signal to the control terminal (41c), and
the voltage applying unit (55) being configured to make the voltage applied to the control terminal (41c) be higher than the voltage making current control element(41) be in the turned off state depending on the feedback signal when the input and output insulation element (100) transmits the feedback signal to the control terminal (41c).

2. The circuit (14) according to claim 1, wherein
the current control element (41) and the output element (40) are a normally turned on type, and
the voltage applying unit (55) applies a negative voltage lower than the potential of the main terminals (41b) of the current control element (41) on a low-potential side to the control terminal (41c), when input and output insulation element (100) does not transmit the feedback signal to the control terminal (41c).

3. The circuit (14) according to claim 1 or 2, wherein
the DC load (12) is a lighting load (12) including a light emitting element as a lighting light source (16), the light emitting element includes a forward drop voltage, and
the voltage applying unit (55) applies the voltage making the current control element (41) be in the turned off state to the control terminal (41c), before the voltage of the DC power is higher than the forward drop voltage.

4. The circuit (14) according to any one of claims 1 to 3, wherein
the input and output insulation element (100) is a photo coupler including a light emitter (101) and a light receiver (102), and
the voltage applying unit (55) applies the voltage to the control terminal (41c) making the current control element (41) be in the turned off state, when the light emitter (101) does not emit the light.

5. The circuit (14) according to claim 4, wherein
the power converter (20) includes a rectifier circuit (30) that rectifies the AC input power,
the voltage applying unit (55) includes
a first voltage dividing resistor (46) provided between the control terminal (41c) and a low-potential terminal (30d) of the rectifier circuit (30),
a second voltage dividing resistor (47) provided between the first voltage dividing resistor (46) and the low-potential terminal (30d), and
a third voltage dividing resistor (48) provided between the main terminal (41b) of the current control element (41) on the low-potential side and the second voltage dividing resistor (47), and
the light receiver (102) is provided between the second voltage dividing resistor (47) and the third voltage dividing resistor (48), and changes the voltage of the control terminal (41c) by changing the dividing ratio of the first to third voltage dividing resistors (46, 47, 48).

6. A luminaire device (10) comprising:
a lighting load (12); and
the power supply circuit (14) according to any one of claims 1 to 5 that supplies power to the lighting load (12).
